# EUROPEAN PATENT SPECIFICATION

(11) **EP 4 436 222 B1**
(45) Date of publication and mention of the grant of the patent: **17.09.2025**
(21) Application number: 23163244.9
(22) Date of filing: 21.03.2023
(51) Int. Cl.: H04W 4/40, H04W 4/90

(54) **EMERGENCY ASSISTANCE SYSTEM**
NOTFALLASSISTENZSYSTEM
SYSTÈME D'ASSISTANCE D'URGENCE

(43) Date of publication of application: 25.09.2024
(73) Proprietor: Volvo Car Corporation, 405 31 Göteborg (SE)
(72) Inventor: PEREZ BARRERA, Oswaldo, 405 31 Göteborg (SE); MORALES, Gerardo, 405 31 Göteborg (SE)
(74) Representative: Maiwald GmbH

(56) References cited:
- KR-A- 20050 113 349
- US-B1- 10 893 501
- US-B1- 10 939 244

## Description

The present disclosure relates to an emergency assistance system.

The present disclosure is additionally relates to an emergency assistance method.

Furthermore, the present disclosure relates to a computer program element for such emergency assistance method.

Nowadays, many people rely on mobile devices to communicate. In case of an unexpected situation, user's dependence on the mobile devices increases. However, sometimes the devices are out of power or signal reception range. Accordingly, the user may be unable to get a proper aid in case of an unexpected emergent situation.
Reference document US 10,939,244 B1 relates to locating a tracking device that is out of communication range with a control system provided in a track and locate system.

Hence, there may be a need to provide an improved emergency assistance system, which may realize reliable user tracking.

The problem is at least partially solved or alleviated by the subject matter of the independent claims of the present disclosure, namely by an emergency assistance system according to claim 1, an emergency assistance method according to claim 11 and a computer program element according to claim 12, wherein further examples are incorporated in the dependent claims.

It should be noted that the aspects of the disclosure described in the following apply to the emergency assistance system, the emergency assistance method and the computer program element for performing the emergency assistance method.

According to a first aspect, there is provided an emergency assistance system. The emergency assistance system comprises a position monitoring unit, a user tracking unit and a multi-access data storage unit. The position monitoring unit is arrangeable in a mobile device of a user. The user tracking unit is arrangeable in a vehicle of the user and comprises at least one wireless network element. The position monitoring unit is configured to monitor position information of the user and send the position information to the multi-access data storage unit. The user tracking unit is configured to receive the position information of the user from the multi-access data storage unit via the wireless network element and monitor a current route of the user based on the position information.

The emergency assistance system according to the present disclosure enables user tracking between a vehicle and a mobile device of the user. If the user is in an unexpected emergent situation, the vehicle may perform emergency actions set by the user. Accordingly, the user may be aided quickly.

The position monitoring unit may act as an interface between the user and the vehicle. The position monitoring unit may be integrated in the mobile device of the user, for instance in terms of a mobile application. The mobile device may be any network-compatible portable devices, such as a smartphone, a smartwatch, a tablet, a smart speaker, etc. When the user leaves the vehicle, the user may take the mobile device.

The user tracking unit may be configured to monitor the user's location and/or movement outside the vehicle. Accordingly, the wireless network element of the user tracking unit may communicate with the mobile device, which may be connected to the vehicle and/or the user tracking unit by the user. The wireless network element may comprise wireless internet access, Wi-Fi, Bluetooth, 4G, 5G, and/or a combination thereof.

The position monitoring unit may be adapted to communicate one or more subsystems of the mobile device to receive the position information of the user. Conventionally, the mobile devices are equipped with various sensor units, which are able to collect environment-related data. For instance, the position monitoring unit may be configured to receive the position information of the mobile device, thus the user, from GPS and GNSS sensors providing precise geographic information including longitude, latitude, altitude and/or elevation. The position monitoring unit may be further configured to send the position information of the user via a wireless network element of the mobile device to the multi-access data storage unit.

The multi-access data storage unit may be adapted to communicate both of the mobile device, specifically the position monitoring unit and the vehicle, specifically the user tracking unit. The multi-access data storage unit may be configured to store the position data received from the position monitoring unit. The position monitoring unit may upload the position information of the user to the multi-access data storage unit in real time or in a predefined time interval. The multi-access data storage unit may be arranged in the vehicle and/or in an external server such as cloud-based data storage unit.

The user tracking unit may be configured to access the multi-access data storage unit and receive the position information of the user provided by the position monitoring unit. Accordingly, the user tracking unit may be able to assess the position information and monitor the current route of the user based on the assessed position information.

**In** an example, the user tracking unit is configured to send an activation signal to the position monitoring unit, when the user tracking unit is activated. The user tracking unit may not need to be always on, for instance, when the user is present in the vehicle. The user tracking unit may be activated by the user, if the user desires the vehicle to track the position of the user. According to the user's input to activate the user tracking unit, the user tracking unit may send the activation signal to the mobile device, specifically the position monitoring unit to initiate the communication with the position monitoring unit.

In an example, the user tracking unit is configured to receive absence information from the user comprising at least one of absence duration, number of contact try in case of an inaccessibility of the position monitoring unit and contact details of an emergency contact person. During tracking the position and/or the current route of the user, the user tracking unit may be unable to access the mobile device of the user. The inaccessibility of the position monitoring unit or the mobile device may be caused due to low power status, poor network signal conditions of the mobile device, etc.

Accordingly, the user may define the absence information prior to activating the user tracking unit, which may contain i) how long the user and/or the mobile device of the user may not be accessible, ii) how often the user tracking unit may try to access the position monitoring unit of the mobile device, iii) contact details such as telephone number of one or more persons, who can be contacted in an emergent situation, etc. Hence, the user tracking unit may be able to proceed the next steps properly, in case of the inaccessibility of the user or mobile device based on the absence information.

In an example, the position monitoring unit is configured to send operational information of the mobile device to the multi-access data storage unit. The operational information of the mobile device may comprise mobile network connectivity, current battery capacity, etc. The user tracking unit may be configured to access the multi-access data storage unit and receive the operational information of the mobile device. Accordingly, the user tracking unit may be able to determine accessibility or inaccessibility of the mobile device or the user.

In an example, the user tracking unit is configured to send at least a message to the mobile device, in case of a weak connectivity between the user tracking unit and the position monitoring unit. The message contains task information if the user tracking unit loses the connectivity to the mobile device.

In an example, the task information comprises at least one of deactivating the user tracking unit, increasing the absence duration, continuing monitoring by the user tracking unit. The user tracking unit may be adapted to send the message to the mobile device based on the operational information of the mobile device. If the accessibility of the user or the mobile device is weak, which may mean that the mobile device may have a weak mobile network connectivity, the user tracking unit may send the message to the user via the mobile device, which task should be performed in case of a complete inaccessibility. Thus, the task information may be based on the absence information, which may be set by the user.

For instance, if the operational information of the mobile device indicates that accessibility to the mobile device is weak or instable, the user tracking unit may send a message to the user via the mobile device, whether the user tracking unit should cancel the monitor of the current route of the user, keep monitoring the current route considering the absence time adjusted by the user in the absence information, or keep the monitoring with increased absence time. Based on the message, the user may be able to provide an input regarding the task to be performed as the next step.

In an example, the user tracking unit is configured to send at least a message to the mobile device, in case of a weak power capacity of the mobile device, the message containing task information if the mobile device is powered off. The user tracking unit may be also adapted to communicate with the mobile device based on the current battery capacity of the mobile device.

For instance, if the operational information of the mobile device indicates that the mobile device can be powered off soon, the user tracking unit may send a message to the user via the mobile device, whether the user tracking unit should cancel the monitor of the current route of the user, keep monitoring the current route considering the absence time adjusted by the user in the absence information, or keep the monitoring with increased absence time. Based on the message, the user may be able to provide an input regarding the task to be performed as the next step.

In an example, the user tracking unit is further configured to monitor the duration of absence of the user. If the current absence duration exceeds the predetermined absence duration stored in the absence information and the user tracking unit loses the connectivity to the mobile device, the user tracking unit is configured to inform the emergency contact person about an inaccessibility of the user.

Even though the user tracking unit may not be able to access the position monitoring unit of the mobile device, the user tracking unit may further monitor the absence duration of the user. The user tracking unit may be adapted to continue monitoring the absence duration automatically or by the user's input, which can be provided in response to the message sent by the user tracking unit in case of a weak mobile network connectivity and/or a low power capacity of the mobile device.

The user tracking unit may be able to contact the emergency contact person about an inaccessibility of the user, if the current absence duration exceeds the predetermined absence duration despite repeated tries to connect the position monitoring unit and/or the mobile device, wherein the absence duration and the number of tries may be defined in the individual absence information of the user.

In an example, the user tracking unit is configured to call an emergency rescue service based on an input of the emergency contact person. The user tracking unit may be adapted to receive an input of the emergency contact person for the next step to be performed. For instance, if the user tracking unit contacts the emergency contact person due to the inaccessibility of the user, the user tracking unit may ask the emergency contact person, whether to contact emergency rescue service. Additionally or alternatively, the user tracking unit may be also able receive further instructions from the emergency contact person, for instance, increasing the absence duration, further trying to access the mobile device, deactivating the user tracking unit, etc.

In an example, the user tracking unit is configured to send the position information of the user to the emergency rescue service. If the user tracking unit contacts the emergency rescue service based on the input of the emergency contact person, the user tracking unit may be also able to send the position information or the current route of the user, which was most recently received by the position monitoring unit. Accordingly, the emergency rescue service may easily find the user, who may be in an unexpected emergent situation.

In an example, the emergency assistance system further comprises a human-machine interface unit, which is arrangeable in the user's vehicle and configured to receive user's input. The user tracking unit may be coupled with the human-machine interface unit arranged in the same vehicle. The human-machine interface unit may adapt one or more user-friendly applications to facilitate communication between the user and the vehicle. The human-machine interface unit may allow the user to enter an input via a (touch) screen, a voice control and/or a gesture control. The human-machine interface unit may be a part of an infotainment system of the vehicle.

The human-machine interface unit may be configured to interact with the user. Accordingly, the human-machine interface unit may be able to receive an input from the user such as the absence information of the user and provide an output in response to the received input. Additionally, the human-machine interface unit may be also configured to display the current route of the user by overlapping it on a map, the absence information of the user, the messages sent to the user due to the weak network connectivity or weak battery capacity of the mobile device, etc.

In an example, the user tracking unit is configured to be activated or deactivated remotely via the mobile device. The user tracking unit may be activated or deactivated by the user prior to leaving the vehicle directly via the human-machine interface unit. Additionally or alternatively, the user tracking unit may be activated or deactivated via the mobile device of the user, which comprises a mobile application coupled with the vehicle via wireless network element.

In an example, the user tracking unit may be controlled by another mobile device, which was not connected to the user tracking unit originally. If the mobile device of the user is inaccessible, the user may be able to connect to the user tracking unit through another mobile device through a web-based application and/or mobile application. Additionally, the user may be also able to provide an input via another mobile device regarding the task information.

A vehicle may comprise an emergency assistance system as described above.

According to a third aspect, there is provided an emergency assistance method. The method comprises, but not necessarily in this order,
- monitoring position information of the user and sending the position information to the multi-access data storage unit,
- receiving the position information of the user from the multi-access data storage unit via the wireless network element, and
- monitoring a current route of the user based on the position information.

The position monitoring unit is arrangeable in a mobile device of a user. The user tracking unit is arrangeable in a vehicle of the user and comprises at least one wireless network element.

According to a fourth aspect, there is provided a computer program element. The computer program element is configured for an emergency assistance system as described above. The computer program element is adapted to performed the method steps as described above, when being executed by a processing element.

One or more computer storage media. The computer storage media may be encoded with instructions, that when executed by a computer, cause the computer to perform the operations of the respective method as described above.

The storage media may comprise internal to a computing device, such as a computer's SSD, or a removable device such as an external HDD or universal serial bus (USB) flash drive. There are also other types of storage media, including magnetic tape, compact discs (CDs) and non-volatile memory (NVM) cards.

It should be noted that the above examples may be combined with each other irrespective of the aspect involved. Accordingly, the method may be combined with structural features and, likewise, the system may be combined with features described above with regard to the method.

These and other examples of the present disclosure will become apparent from and elucidated with reference to the embodiments described hereinafter.

Examples of the present disclosure will be described in the following with reference to the following drawings.
- Fig. 1: shows schematically an example of an emergency assistance system according to the present disclosure.
- Fig. 2: shows schematically an example of a current route of a user.
- Fig. 3: shows schematically an example of an emergency assistance method according to the present disclosure.

The Figures are merely schematic representations and serves only to illustrate examples of the disclosure. Identical or equivalent elements are in principle provided with the same reference signs.

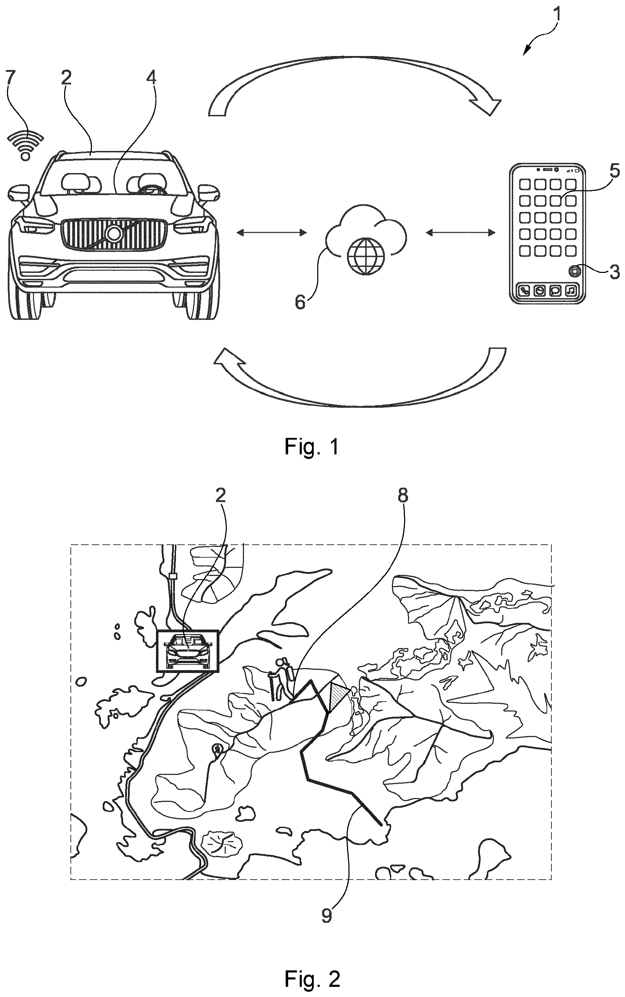

Fig. 1 shows an emergency assistance system 1 comprising a position monitoring unit 5, a user tracking unit 4 and a multi-access data storage unit 6. The emergency assistance system 1 may be adapted for tracking and aiding the user in case of an unexpected emergent situation. For instance, the emergency assistance system 1 may be utilized during hiking, sailing, cycling, etc.

The position monitoring unit 5 is arranged in a mobile device 3 of a user. The user tracking unit 4 is arranged in a vehicle 2 of the user and comprises at least one wireless network element 7. The position monitoring unit 5 comprises GPS or GNSS sensors and it is configured to monitor position information 8 of the user. The position monitoring unit 5 is further configured to send the position information 8 to the multi-access data storage unit 6 such as cloud-based data storage unit. The user tracking unit 4 is configured to receive the position information 8 of the user from the multi-access data storage unit 6 via the wireless network element 7 and monitor a current route 9 of the user based on the position information 8.

The emergency assistance system 1 further comprises a human-machine interface unit, which is arrangeable in the user's vehicle 2 and configured to receive user's input. Accordingly, the user tracking unit 4 is able to receive user-specific absence information from the user comprising at least one of absence duration, number of contact try in case of an inaccessibility of the position monitoring unit 5 and contact details of an emergency contact person. Additionally or alternatively, the user tracking unit 4 can also receive the user-specific absence information remotely from the mobile device 3 of the user.

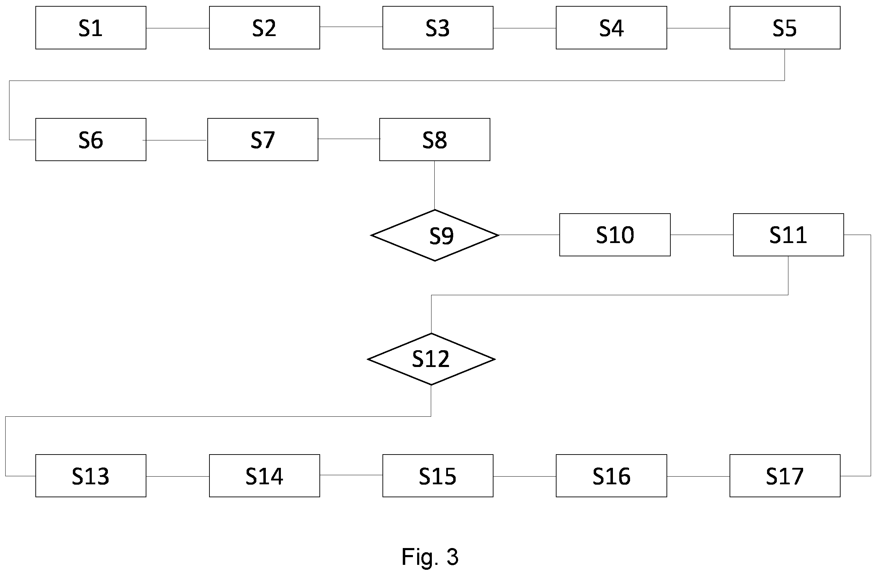

As exemplarily shown in Fig. 2, the user can be hiking. As shown in Fig. 3, the emergency assistance method for the user comprises, but not necessarily in this order:

| | |
|---|---|
| S1 | receiving absence information from the user, |
| S2 | connecting the vehicle 2 and the mobile device 3, |
| S3 | activating the user tracking unit 4, |
| S4 | sending an activation signal to the position monitoring unit 5. |
| S5 | monitoring position information 8 of the user and sending the position information 8 to the multi-access data storage unit 6, |
| S6 | receiving the position information 8 of the user from the multi-access data storage unit 6 via the wireless network element 7, |
| S7 | monitoring a current route 9 of the user based on the position information 8, |
| S8 | sending operational information of the mobile device 3 comprising mobile network connectivity and current battery capacity to the multi-access data storage unit 6, |
| S9 | determining whether the mobile network connectivity and/or the current battery capacity is in a weak state, |
| S10 | send at least a message to the mobile device 3, |
| S11 | receiving an input from the user, in case of an inaccessibility, |
| S12 | determining whether duration of absence of the user exceeds the predetermined absence duration stored in the absence information, |
| S13 | contacting the emergency contact person about an inaccessibility of the user, |
| S14 | receiving an input from the emergency contact person, |
| S15 | calling an emergency rescue service based on an input of the emergency contact person, |
| S16 | sending the position information 8 of the user to the emergency rescue service, |
| S17 | deactivating the user tracking unit 4. |

Generally, the user is able to provide the vehicle 2 and/or the user tracking unit 4 with individual absence information comprising at least one of absence duration, number of contact try in case of an inaccessibility of the position monitoring unit 5 and contact details of an emergency contact person. During driving the vehicle 2, the mobile device 3 may be connected with the vehicle 2 such that the vehicle 2 may be able to identify the user. Prior to starting the hiking, the user tracking unit 4 may be activated by the user directly in the vehicle 2 or remotely via the mobile device 3. As soon as the user tracking unit 4 is activated, the user tracking unit 4 may send an activation signal to the position monitoring unit 5.

The message, which can be sent to the mobile device 3 in case of the weak mobile network connectivity and/or weak battery capacity, comprises task information if the mobile device 3 is in accessible. The task information comprises at least one of deactivating the user tracking unit 4, increasing the absence duration, continuing monitoring by the user tracking unit 4.

When providing the position information 8 of the user to the emergency rescue service, the user tracking unit 4 may be also able to send the position information 8 of the user, which was most recently received by the position monitoring unit 5.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### Reference signs

- 1: emergency assistance system
- 2: vehicle
- 3: mobile device
- 4: user tracking unit
- 5: position monitoring unit
- 6: multi-access data storage unit
- 7: wireless network element
- 8: position information
- 9: route of the user

## Claims

1. An emergency assistance system (1), comprising
- a position monitoring unit (5),
- a user tracking unit (4), and
- a multi-access data storage unit (6),
the position monitoring unit (5) being arrangeable in a mobile device (3) of a user, and being configured to monitor position information (8) of the user and send the position information (8) to the multi-access data storage unit (6), and
the user tracking unit (4) being arrangeable in a vehicle (2) of the user and comprising at least one wireless network element (7) and being configured to:
- monitor the user's location and movement outside the vehicle (2),
- receive the position information (8) of the user from the multi-access data storage unit (6) via the wireless network element (7), and
- monitor a current route (9) of the user based on the position information (8),
- determine whether a mobile network connectivity and/or a current battery capacity of the mobile device (3) is in a weak state,
- send at least a message to the mobile device (3), in case of a weak connectivity between the user tracking unit (4) and the position monitoring unit (5), the message containing task information if the user tracking unit (4) loses the connectivity to the mobile device (3), and/or
- send at least a message to the mobile device (3), in case of a weak power capacity of the mobile device (3), the message containing task information if the mobile device (3) is powered off.

2. The emergency assistance system (1) according to claim 1, the user tracking unit (4) being configured to send an activation signal to the position monitoring unit (5), when the user tracking unit (4) being activated.

3. The emergency assistance system (1) according to claim 1 or 2, the user tracking unit (4) being configured to receive absence information from the user, the absence information comprising at least one of absence duration, number of contact trial in case of an inaccessibility of the position monitoring unit (5) and contact details of an emergency contact person.

4. The emergency assistance system (1) according to any of previous claims, the position monitoring unit (5) being configured to send operational information of the mobile device (3) to the multi-access data storage unit (6).

5. The emergency assistance system (1) according to any one of the previous claims, the task information comprising at least one of deactivating the user tracking unit (4), increasing the absence duration, continuing monitoring by the user tracking unit (4).

6. The emergency assistance system (1) according to any of the previous claims, the user tracking unit (4) being further configured to monitor the duration of absence of the user,
if the current absence duration exceeds the predetermined absence duration stored in the absence information and the user tracking unit (4) loses the connectivity to the mobile device (3), the user tracking unit (4) being configured to inform the emergency contact person about an inaccessibility of the user.

7. The emergency assistance system (1) according to any of the previous claims, the user tracking unit (4) being configured to call rescue services based on an input of the emergency contact person.

8. The emergency assistance system (1) according to the previous claim, the user tracking unit (4) being configured to send the position information (8) and/or the current route (9) of the user to the rescue services.

9. The emergency assistance system (1) according to any of the previous claims, further comprising a human-machine interface unit, the human-machine interface unit being arrangeable in the user's vehicle (2) and configured to receive user's input.

10. The emergency assistance system (1) according to any of the previous claims, the user tracking unit (4) being configured to be activated or deactivated remotely via the mobile device (3).

11. An emergency assistance method, performed by an emergency assistance system (1), comprising:
- a position monitoring unit (5) being arrangeable in a mobile device (3) of a user,
- a user tracking unit (4), comprising at least one wireless network element (7), and being arrangeable in a vehicle (2) of the user, and being configured to monitor the user's location and movement outside the vehicle (2) of the user, and
- a multi-access data storage unit (6),
the method comprising:
- monitoring (S5) position information (8), by means of the position monitoring unit (5), of the user and sending the position information (8) to the multi-access data storage unit (6),
- receiving (S6) the position information (8) of the user from the multi-access data storage unit (6) via the wireless network element (7) of the user tracking unit (4), and
- monitoring (S7), by means of the user tracking unit (4), a current route (9) of the user based on the position information (8),
- determining (S9), by means of the user tracking unit (4), whether the mobile network connectivity and/or the current battery capacity of the mobile device (3) is in a weak state,
- sending (S10), by means of the user tracking unit (4), at least a message to the mobile device (3), in case of a weak connectivity between the user tracking unit (4) and the position monitoring unit (5), the message containing task information if the user tracking unit (4) loses the connectivity to the mobile device (3), and/or
- sending (S10), by means of the user tracking unit (4), at least a message to the mobile device (3), in case of a weak power capacity of the mobile device (3), the message containing task information if the mobile device (3) is powered off.

12. A computer program element, which, when being executed by a processing element, is adapted to perform the method steps according to claim 11.

## Patentansprüche

1. Ein Notfallassistenzsystem (1), umfassend
- eine Positionsüberwachungseinheit (5),
- eine Benutzerverfolgungseinheit (4) und
- eine Mehrfachzugriff-Datenspeichereinheit (6),
wobei die Positionsüberwachungseinheit (5) in einem mobilen Gerät (3) eines Benutzers anordenbar ist und so eingerichtet ist, dass sie Positionsinformationen (8) des Benutzers überwacht und die Positionsinformationen (8) an die Mehrfachzugriff-Datenspeichereinheit (6) sendet, und
wobei die Benutzerverfolgungseinheit (4) in einem Fahrzeug (2) des Benutzers anordenbar ist und mindestens ein drahtloses Netzwerkelement (7) umfasst und eingerichtet ist, zum:
- Überwachen des Standorts und der Bewegung des Benutzers außerhalb des Fahrzeugs (2),
- Empfangen der Positionsinformationen (8) des Benutzers von der Mehrfachzugriff-Datenspeichereinheit (6) über das drahtlose Netzwerkelement (7) und
- Überwachen einer aktuellen Route (9) des Benutzers auf der Grundlage der Positionsinformationen (8),
- Bestimmen, ob eine Mobilfunkverbindung und/oder eine aktuelle Akkukapazität des mobilen Geräts (3) in einem schwachen Zustand ist,
- Senden mindestens einer Nachricht an das mobile Gerät (3) im Falle einer schwachen Verbindung zwischen der Benutzerverfolgungseinheit (4) und der Positionsüberwachungseinheit (5), wobei die Nachricht Aufgabeninformationen enthält falls die Benutzerverfolgungseinheit (4) die Verbindung zum mobilen Gerät (3) verliert, und/oder
- Senden mindestens einer Nachricht an das mobile Gerät (3) im Falle einer schwachen Leistungskapazität des mobilen Geräts (3), wobei die Nachricht Aufgabeninformationen enthält, falls das mobile Gerät (3) ausgeschaltet wird.

2. Notfallassistenzsystem (1) nach Anspruch 1, wobei die Benutzerverfolgungseinheit (4) so eingerichtet ist, dass sie ein Aktivierungssignal an die Positionsüberwachungseinheit (5) sendet, wenn die Benutzerverfolgungseinheit (4) aktiviert wird.

3. Notfallassistenzsystem (1) nach Anspruch 1 oder 2, wobei die Benutzerverfolgungseinheit (4) eingerichtet ist, um Abwesenheitsinformationen vom Benutzer zu empfangen, wobei die Abwesenheitsinformationen mindestens eines von Abwesenheitsdauer, Anzahl von Kontaktversuchen im Falle einer Unerreichbarkeit der Positionsüberwachungseinheit (5) und Kontaktdaten einer Notfallkontaktperson umfassen.

4. Notfallassistenzsystem (1) nach einem der vorhergehenden Ansprüche, wobei die Positionsüberwachungseinheit (5) so eingerichtet ist, dass sie Betriebsinformationen des mobilen Geräts (3) an die Mehrfachzugriff-Datenspeichereinheit (6) sendet.

5. Notfallassistenzsystem (1) nach einem der vorstehenden Ansprüche, wobei die Aufgabeninformation zumindest eines von Deaktivieren der Benutzerverfolgungseinheit (4), Erhöhen der Abwesenheitsdauer, Fortsetzen der Überwachung durch die Benutzerverfolgungseinheit (4) umfasst.

6. Notfallassistenzsystem (1) nach einem der vorhergehenden Ansprüche, wobei die Benutzerverfolgungseinheit (4) ferner eingerichtet ist, die Dauer der Abwesenheit des Benutzers zu überwachen und falls die aktuelle Abwesenheitsdauer die in den Abwesenheitsinformationen gespeicherte vorbestimmte Abwesenheitsdauer überschreitet und die Benutzerverfolgungseinheit (4) die Verbindung zum mobilen Gerät (3) verliert die Benutzerverfolgungseinheit (4) eingerichtet ist, die Notfallkontaktperson über eine Unerreichbarkeit des Benutzers zu informieren.

7. Notfallassistenzsystem (1) nach einem der vorhergehenden Ansprüche, wobei die Benutzerverfolgungseinheit (4) so eingerichtet ist, dass sie auf der Grundlage einer Eingabe der Notfallkontaktperson Rettungsdienste anruft.

8. Notfallassistenzsystem (1) nach dem vorherigen Anspruch, wobei die Benutzerverfolgungseinheit (4) so eingerichtet ist, dass sie die Positionsinformationen (8) und/oder die aktuelle Route (9) des Benutzers an die Rettungsdienste sendet.

9. Notfallassistenzsystem (1) nach einem der vorhergehenden Ansprüche, ferner umfassend eine Mensch-Maschine-Schnittstelleneinheit, wobei die Mensch-Maschine-Schnittstelleneinheit im Fahrzeug (2) des Benutzers anordenbar und zum Empfangen von Benutzereingaben eingerichtet ist.

10. Notfallassistenzsystem (1) nach einem der vorhergehenden Ansprüche, wobei die Benutzerverfolgungseinheit (4) so eingerichtet ist, dass sie über das mobile Gerät (3) ferngesteuert aktiviert oder deaktiviert werden kann.

11. Ein Notfallassistenzverfahren, das von einem Notfallassistenzsystem (1) durchgeführt wird, umfassend:
- eine Positionsüberwachungseinheit (5), die in einem mobilen Gerät (3) eines Benutzers anordenbar kann,
- eine Benutzerverfolgungseinheit (4), umfassend mindestens ein drahtloses Netzwerkelement (7), die in einem Fahrzeug (2) des Benutzers anordenbar ist, und eingerichtet, um den Standort und die Bewegung des Benutzers außerhalb des Fahrzeugs (2) des Benutzers zu überwachen, und
- eine Mehrfachzugriff-Datenspeichereinheit (6),
wobei das Verfahren umfasst:
- Überwachen (S5) der Positionsinformationen (8) des Benutzers mittels der Positionsüberwachungseinheit (5) und Senden der Positionsinformationen (8) an die Mehrfachzugriff-Datenspeichereinheit (6),
- Empfangen (S6) der Positionsinformationen (8) des Benutzers von der Mehrfachzugriff-Datenspeichereinheit (6) über das drahtlose Netzwerkelement (7) der Benutzerverfolgungseinheit (4) und
- Überwachen (S7) einer aktuellen Route (9) des Benutzers anhand der Positionsinformationen (8) mittels der Benutzerverfolgungseinheit (4),
- Bestimmen (S9) mittels der Benutzerverfolgungseinheit (4), ob die Mobilfunknetzverbindung und/oder die aktuelle Akkukapazität des Mobilgeräts (3) in einem schwachen Zustand ist,
- Senden (S10) mittels der Benutzerverfolgungseinheit (4) mindestens einer Nachricht an das mobile Gerät (3) im Falle einer schwachen Verbindung zwischen der Benutzerverfolgungseinheit (4) und der Positionsüberwachungseinheit (5), wobei die Nachricht Aufgabeninformationen enthält, wenn die Benutzerverfolgungseinheit (4) die Verbindung zum mobilen Gerät (3) verliert, und/oder
- Senden (S10) mittels der Benutzerverfolgungseinheit (4) mindestens einer Nachricht an das mobile Gerät (3), falls die Leistungskapazität des mobilen Geräts (3) schwach ist, wobei die Nachricht Aufgabeninformationen enthält, falls das mobile Gerät (3) ausgeschaltet ist.

12. Ein Computerprogrammelement, das, wenn es von einem Verarbeitungselement ausgeführt wird, dazu ausgelegt ist, die Verfahrensschritte gemäß Anspruch 11 auszuführen.

## Revendications

1. Système d'aide d'urgence (1) comprenant
- une unité de surveillance de position (5),
- une unité de suivi d'utilisateur (4), et
- une unité de stockage de données à accès multiple (6),
l'unité de surveillance de position (5) pouvant être disposée dans un dispositif mobile (3) d'un utilisateur, et étant configurée pour surveiller des informations de position (8) de l'utilisateur et envoyer les informations de position (8) à l'unité de stockage de données à accès multiple (6), et
l'unité de suivi d'utilisateur (4) pouvant être disposée dans un véhicule (2) de l'utilisateur et comprenant au moins un élément de réseau sans fil (7) et étant configurée pour :
- surveiller l'emplacement et le déplacement de l'utilisateur à l'extérieur du véhicule (2),
- recevoir les informations de position (8) de l'utilisateur à partir de l'unité de stockage de données à accès multiple (6) par l'intermédiaire de l'élément de réseau sans fil (7), et
- surveiller un itinéraire actuel (9) de l'utilisateur sur la base des informations de position (8),
- déterminer si une connectivité de réseau mobile et/ou une capacité de batterie actuelle du dispositif mobile (3) sont dans un état faible,
- envoyer au moins un message au dispositif mobile (3), en cas de faible connectivité entre l'unité de suivi d'utilisateur (4) et l'unité de surveillance de position (5), le message contenant des informations de tâche si l'unité de suivi d'utilisateur (4) perd la connectivité avec le dispositif mobile (3), et/ou
- envoyer au moins un message au dispositif mobile (3), en cas de faible capacité d'énergie du dispositif mobile (3), le message contenant des informations de tâche si le dispositif mobile (3) est hors tension.

2. Système d'aide d'urgence (1) selon la revendication 1, l'unité de suivi d'utilisateur (4) étant configurée pour envoyer un signal d'activation à l'unité de surveillance de position (5), lorsque l'unité de suivi d'utilisateur (4) est activée.

3. Système d'aide d'urgence (1) selon la revendication 1 ou 2, l'unité de suivi d'utilisateur (4) étant configurée pour recevoir des informations d'absence de l'utilisateur, les informations d'absence comprenant au moins l'un parmi la durée d'absence, le nombre d'essais de contact en cas d'inaccessibilité de l'unité de suivi de position (5) et les coordonnées d'une personne à contacter en cas d'urgence.

4. Système d'aide d'urgence (1) selon l'une quelconque des revendications précédentes, l'unité de surveillance de position (5) étant configurée pour envoyer des informations opérationnelles du dispositif mobile (3) à l'unité de stockage de données à accès multiple (6).

5. Système d'aide d'urgence (1) selon l'une quelconque des revendications précédentes, les informations de tâche comprenant au moins l'un parmi la désactivation de l'unité de suivi d'utilisateur (4), l'augmentation de la durée d'absence, la poursuite de la surveillance par l'unité de suivi d'utilisateur (4).

6. Système d'aide d'urgence (1) selon l'une quelconque des revendications précédentes, l'unité de suivi d'utilisateur (4) étant en outre configurée pour surveiller la durée d'absence de l'utilisateur,
si la durée d'absence actuelle dépasse la durée d'absence prédéterminée enregistrée dans les informations d'absence et que l'unité de suivi d'utilisateur (4) perd la connectivité avec le dispositif mobile (3), l'unité de suivi d'utilisateur (4) étant configurée pour informer la personne à contacter en cas d'urgence de l'inaccessibilité de l'utilisateur.

7. Système d'aide d'urgence (1) selon l'une quelconque des revendications précédentes, l'unité de suivi d'utilisateur (4) étant configurée pour appeler des services de secours sur la base d'une entrée de la personne à contacter en cas d'urgence.

8. Système d'aide d'urgence (1) selon la revendication précédente, l'unité de suivi d'utilisateur (4) étant configurée pour envoyer les informations de position (8) et/ou l'itinéraire actuel (9) de l'utilisateur aux services de secours.

9. Système d'aide d'urgence (1) selon l'une quelconque des revendications précédentes, comprenant en outre une unité d'interface homme-machine, l'unité d'interface homme-machine pouvant être disposée dans le véhicule de l'utilisateur (2) et configurée pour recevoir des données de l'utilisateur.

10. Système d'aide d'urgence (1) selon l'une quelconque des revendications précédentes, l'unité de suivi d'utilisateur (4) étant configurée pour être activée ou désactivée à distance par l'intermédiaire du dispositif mobile (3).

11. Procédé d'aide d'urgence, effectué par un système d'aide d'urgence (1), comprenant :
- une unité de surveillance de position (5) pouvant être disposée dans un dispositif mobile (3) d'un utilisateur,
- une unité de suivi d'utilisateur (4), comprenant au moins un élément de réseau sans fil (7), et pouvant être disposée dans un véhicule (2) de l'utilisateur, et étant configurée pour surveiller l'emplacement et le déplacement de l'utilisateur en dehors du véhicule (2) de l'utilisateur, et
- une unité de stockage de données à accès multiple (6),
le procédé comprenant :
- la surveillance (S5) d'informations de position (8) de l'utilisateur, au moyen de l'unité de surveillance de position (5), et l'envoi des informations de position (8) à l'unité de stockage de données à accès multiple (6),
- la réception (S6) des informations de position (8) de l'utilisateur à partir de l'unité de stockage de données à accès multiple (6) par l'intermédiaire de l'élément de réseau sans fil (7) de l'unité de suivi d'utilisateur (4), et
- la surveillance (S7), au moyen de l'unité de suivi d'utilisateur (4), d'un itinéraire actuel (9) de l'utilisateur sur la base des informations de position (8),
- le fait de déterminer (S9), au moyen de l'unité de suivi d'utilisateur (4), si la connectivité de réseau mobile et/ou la capacité de batterie actuelle du dispositif mobile (3) sont dans un état faible,
- l'envoi, au moyen de l'unité de suivi d'utilisateur (4), d'au moins un message au dispositif mobile (3), en cas de faible connectivité entre l'unité de suivi d'utilisateur (4) et l'unité de surveillance de position (5), le message contenant des informations de tâche si l'unité de suivi d'utilisateur (4) perd la connectivité avec le dispositif mobile (3), et/ou
- l'envoi, au moyen de l'unité de suivi d'utilisateur (4), d'au moins un message au dispositif mobile (3), en cas de faible capacité d'énergie du dispositif mobile (3), le message contenant des informations de tâche si le dispositif mobile (3) est hors tension.

12. Élément de programme informatique qui, lorsqu'il est exécuté par un élément de traitement, est conçu pour effectuer les étapes de procédé selon la revendication 11.
